# FASCICULE DE BREVET EUROPEEN

(11) **EP 3 852 252 B1**
(45) Date de publication et mention de la délivrance du brevet: **13.07.2022**
(21) Numéro de dépôt: 21151710.7
(22) Date de dépôt: 14.01.2021
(51) Int. Cl.: H02K 21/16, H02P 6/08, H02K 1/27, H02K 1/14, H02K 29/03, H02K 37/14, H02K 1/278

(54) **DISPOSITIF D'ENTRAINEMENT ROTATIF ELECTROMAGNETIQUE**
ELEKTROMAGNETISCHE DREHANTRIEBSVORRICHTUNG
ELECTROMAGNETIC ROTARY DRIVE DEVICE

(30) Priorité: 14.01.2020 FR 2000326
(43) Date de publication de la demande: 21.07.2021
(73) Titulaire: XAP, 30420 Calvisson (FR)
(72) Inventeur: BOUSQUET, Jérôme, 30320 POULX (FR)
(74) Mandataire: Roman, Alexis

(56) Documents cités:
- DE-A1-102016 117 662
- DE-A1-102017 203 757
- US-A1- 2010 314 962

## Description

### Domaine technique.

L'invention concerne un dispositif d'entraînement rotatif électromagnétique, ainsi que l'utilisation d'un tel dispositif pour actionner un sélecteur de boîte de vitesses ou d'embrayage d'un véhicule automobile. Le dispositif objet de l'invention n'est toutefois pas limité à cette utilisation. L'invention a encore pour objet un procédé de fabrication d'un dispositif d'entraînement rotatif électromagnétique.

Le domaine de l'invention concerne les actionneur s rotatifs électromagnétiques et plus particulièrement celui de tels actionneurs comportant un stator et un rotor.

### Etat de la technique.

Les dispositifs d'entraînement rotatif électromagnétiques sont connus de l'art antérieur et par exemple décrit dans les documents brevets DE102016117662 (JOHNSON ELECTRIC SA), DE102017203757 (BOSCH) ou US 2010/0314962 : (SHIGA NAOTO). Ils comportent généralement un stator (partie fixe) et un rotor (partie mobile). Le stator comporte des noyaux ferromagnétiques sur lesquels sont installés des bobinages respectivement. Le rotor comporte quant à lui des pôles rotoriques aimantés.

L'introduction d'un courant dans les bobinages traversés par les champs magnétiques induits par les pôles aimantés génèrent des forces électromagnétiques susceptibles d'entraîner la rotation du rotor. Aussi, en commandant l'alimentation électrique des bobinages (intensité et sens du courant circulant dans les bobinages) en fonction de la position angulaire du rotor, on crée un champ magnétique tournant adapté pour entraîner en rotation ledit rotor. L'alimentation électrique des bobinages est habituellement commandée par une unité de gestion.

Le rotor peut présenter une ou plusieurs positions d'équilibre stable où ledit rotor n'est soumis à aucun couple, c'est-à-dire qu'il ne tourne pas. Physiquement, une position d'équilibre stable existe lorsqu'on a un équilibre magnétique entre le rotor et le stator. Lorsque les bobinages ne sont pas alimentés, le rotor reste également en position stable du fait de l'attraction magnétique qui subsiste entre les pôles aimantés et les noyaux ferromagnétiques. Selon l'intensité de ce couple résiduel (ou couple de maintien), le rotor 2 est plus ou moins verrouillé en position, ce qui peut être avantageux ou désavantageux selon le type d'application souhaitée.

Lorsqu'on inverse le sens du courant dans les bobinages (c'est-à-dire qu'on inverse leur polarité), les pôles aimantés vont se déplacer par attraction magnétique jusqu'à atteindre une autre position stable. En commandant de façon judicieuse et alternée l'alimentation des bobinages, le rotor va tourner dans le sens horaire ou antihoraire, avec un couple plus ou moins important. La gestion de cette alimentation électrique est bien connue de l'homme du métier.

Lorsque le rotor quitte sa position d'équilibre stable, la force tangentielle d'attraction magnétique appliquée sur les pôles rotoriques est relativement faible au démarrage, de sorte que le couple au démarrage est également faible. Cela est problématique lorsque le rotor doit actionner un mécanisme tel qu'un sélecteur de boîte de vitesses ou d'embrayage d'un véhicule automobile. Sauf à sur-dimensionner les bobinages et les pôles magnétiques, de tels mécanismes ne pourront pas être actionnés. En outre, le temps mis par le rotor pour atteindre la nouvelle position d'équilibre stable n'est pas optimal, le rotor manquant de réactivité au démarrage. Le couple au démarrage et/ou la réactivité au démarrage sont également influencés par le couple résiduel.

Face à cet état des choses, un objectif de l'invention est de proposer un dispositif d'entraînement rotatif électromagnétique permettant d'augmenter le couple au démarrage. Un autre objectif de l'invention est de proposer un dispositif d'entraînement rotatif électromagnétique permettant au rotor d'être extrêmement réactif et d'atteindre plus rapidement une nouvelle position d'équilibre stable, tout en s'assurant que le rotor soit bien maintenu en position d'équilibre stable. Encore un autre objectif de l'invention est de proposer un dispositif d'entraînement rotatif électromagnétique de conception simple, compact, robuste et peu onéreux.

### Présentation de l'invention.

La solution proposée par l'invention est un dispositif d'entraînement rotatif électromagnétique, comportant un stator et un rotor et dans lequel :
- le stator comporte des premiers noyaux ferromagnétiques sur lesquels sont installées des bobinages adaptés pour créer un champ magnétique, lesquels premiers noyaux sont de même forme et une extrémité libre desdits premiers noyaux est agencée selon une première circonférence par rapport à l'axe de rotation du rotor,
- le rotor comporte des pôles rotoriques aimantés,
- une unité de gestion commande l'alimentation électrique des bobinages du stator en fonction de la position angulaire du rotor, de façon à créer un champ magnétique tournant adapté pour entraîner en rotation ledit rotor,
- le rotor présente plusieurs positions d'équilibre stable.

Ce dispositif est remarquable en ce que :
- les premiers noyaux ferromagnétiques et les pôles aimantés sont configurés et agencés de sorte que :
   o dans les positions d'équilibre stable, les pôles aimantés sont désaxés des premiers noyaux ferromagnétiques,
   o chaque premier noyau ferromagnétique est constamment situé en vis-à-vis d'un des pôles aimantés lorsque le rotor se déplace entre deux positions d'équilibre stable,
- le stator comporte des seconds noyaux ferromagnétiques dépourvus de bobinage, lesquels seconds noyaux sont situés entre les premiers noyaux ferromagnétiques de manière à ce que ledit stator présente une alternance de noyaux avec bobinage et de noyaux sans bobinage,
- les seconds noyaux ferromagnétiques sont configurés pour exercer un couple résiduel sur le rotor, lesquels seconds noyaux n'ont pas tous les mêmes dimensions et/ou la même géométrie et une extrémité libre desdits seconds noyaux est agencée selon une seconde circonférence par rapport à l'axe de rotation du rotor, le diamètre de ladite seconde circonférence étant différente du diamètre de la première circonférence.

Le désaxage est une solution simple qui permet d'induire, dès le démarrage, une force tangentielle de répulsion magnétique entre les pôles rotoriques aimantés et les bobinages qui sont de même polarité et en vis-à-vis au démarrage (c'est-à-dire lorsque le rotor quitte une position d'équilibre stable). Au démarrage, cette force électromagnétique tangentielle répulsive permet non seulement de donner un couple important au démarrage, quel que soit le sens de rotation demandé, mais également de permettre au rotor d'être très réactif. En outre, chaque noyau ferromagnétique étant constamment situé en vis-à-vis d'un des pôles aimantés, chaque noyau génère constamment, après démarrage, une force tangentielle de répulsion magnétique et/ou une force tangentielle d'attraction magnétique sur tout ou partie des pôles aimantés lorsque le rotor se déplace entre deux positions d'équilibre stable. Le rotor est ainsi soumis à un couple important, et pratiquement constant, lorsqu'il se déplace entre deux positions d'équilibre stable, ledit rotor atteignant très rapidement la nouvelle position d'équilibre stable. La configuration et l'agencement des seconds noyaux ferromagnétiques permet en outre de générer un couple résiduel permettant d'assurer un verrouillage satisfaisant du rotor dans les positions d'équilibre stable. On a ainsi un bon compromis entre la réactivité du rotor au démarrage et son maintien en position d'équilibre stable.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Selon un mode de réalisation, le diamètre de la seconde circonférence est plus grand que le diamètre de la première circonférence.
- Selon un mode de réalisation, dans une position d'équilibre stable : - un premier pôle aimanté est situé en face d'un premier noyau ferromagnétique, lequel premier pôle aimanté présente un axe et lequel premier noyau ferromagnétique présente un axe ; - un second pôle aimanté est situé en face d'un autre premier noyau ferromagnétique, lequel second pôle aimanté présente une polarité qui est inverse de la polarité du bobinage installé sur ledit autre premier noyau, lesdits premiers noyaux appartenant chacun à une paire distincte de premiers noyaux, lequel second pôle aimanté présente un axe et lequel autre premier noyau ferromagnétique présente un axe ; - les axes desdits premiers noyaux formant un angle β et les axes desdits pôles aimantés formant un angle θ ; le rotor et le stator sont configurés de sorte que : θ > β et π/(2.n) < (θ-β)/2 < (3. π)/(2.n), où n est le nombre de positions d'équilibre stable du rotor.

- Selon un mode de réalisation : - les seconds noyaux ferromagnétiques sont agencés par paire, les noyaux de chaque paire se faisant face et étant disposés symétriquement par rapport à l'axe de rotation du rotor ; - un second noyau ferromagnétique qui est disposé entre deux premiers noyaux et où un angle β entre les axes respectifs desdits premiers noyaux est le plus faible, alors ledit second noyau a une première largeur ; - à l'inverse, un second noyau ferromagnétique qui est disposé entre deux premiers noyaux et où un angle (π-β) entre les axes respectifs desdits premiers noyaux est le plus important, alors ce second noyau a une seconde largeur qui est plus importante que la première largeur.
- Selon un mode de réalisation : - le stator comprend des paires de premiers noyaux ferromagnétiques, et 2K paires de seconds noyaux ferromagnétiques, K étant un nombre entier égal ou supérieur à 1 ; - les bobinages de chaque paire de premiers noyaux ferromagnétiques sont disposés symétriquement par rapport à l'axe de rotation du rotor ; - le rotor présente n pôles rotoriques adjacents, lesquels pôles ont des polarités alternativement opposées, n étant un nombre entier pair supérieur ou égal à 4, le nombre n de pôles rotoriques correspondant au nombre de positions d'équilibre stable dudit rotor.
- Selon un mode de réalisation : - les premiers noyaux ferromagnétiques d'une même paire ont le même axe ; - l'angle β entre les axes de ces paires de premiers noyaux ferromagnétiques est inférieur à π et supérieur à (2. π)/n.
- Selon un mode de réalisation, les pôles aimantés sont diamétralement magnétisés de sorte que leurs lignes de champs soient parallèles à celles des bobinages situés en vis-à-vis desdits pôles.
- Selon un mode de réalisation, une face externe de chaque aimant située en vis-à-vis du stator décrit un secteur angulaire de (2.π) /n +/- 1° à 2°.
- Selon un mode de réalisation, dans une position d'équilibre stable du rotor ou entre deux positions d'équilibre stable dudit rotor, les pôles aimantés présentent au moins une portion constamment située en vis-à-vis d'un premier noyau ferromagnétique avec bobinage ou d'un second noyau ferromagnétique sans bobinage.

Un autre aspect de l'invention concerne un procédé de fabrication d'un dispositif conforme à l'une des caractéristiques précédentes, comprenant une étape consistant à régler l'intensité du couple résiduel exercé sur le rotor dans une position d'équilibre stable, lequel réglage est réalisé en agissant sur les dimensions et/ou la géométrie des seconds noyaux et/ou en agissant sur la seconde circonférence.

Encore un autre aspect de l'invention concerne un sélecteur de boîte de vitesses ou d'embrayage d'un véhicule automobile, caractérisé en ce que ledit sélecteur est relié au rotor du dispositif conforme à l'une des caractéristiques précédentes.

Encore un autre aspect de l'invention concerne un véhicule automobile comportant un sélecteur de boîte de vitesses ou d'embrayage, caractérisé en ce que ledit sélecteur étant relié au rotor du dispositif conforme à l'une des caractéristiques précédentes.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] est une vue d'ensemble d'un dispositif conforme à l'invention,
[Fig. 2] est une vue schématique en coupe transversale d'un stator et d'un rotor conforme à l'invention, le rotor étant dans une première position d'équilibre stable,
[Fig. 3] est une vue schématique en coupe transversale d'un stator et d'un rotor conforme à l'invention, le rotor étant situé entre deux positions d'équilibre stable,
[Fig. 4] est une vue schématique en coupe transversale d'un stator et d'un rotor conforme à l'invention, le rotor étant dans une seconde position d'équilibre stable,
[Fig. 5] est une vue schématique en perspective d'un châssis d'un stator selon l'invention,
[Fig. 6] est une vue en coupe transversale du châssis de la figure 5,
[Fig. 7] est une vue en perspective d'un aimant formant un pôle rotorique,
[Fig. 8] est une vue en perspective d'un assemblage d'aimants selon la figure 7,
[Fig. 9] est une vue schématique en coupe de l'aimant de la figure 6 et sur laquelle sont représentées des lignes de champs magnétiques,
[Fig. 10] est une vue en coupe transversale de l'assemblage de la figure 8,
[Fig. 11] est une vue schématique en perspective d'un arbre adapté pour supporter l'assemblage de la figure 8.

### Description des modes de réalisation.

Tel qu'utilisé ici, sauf indication contraire, l'utilisation des adjectifs ordinaux *«premier», «second»,* etc., pour décrire un objet indique simplement que différentes occurrences d'objets similaires sont mentionnées et n'implique pas nécessairement que les objets ainsi décrits doivent être dans une séquence donnée, que ce soit dans le temps, dans l'espace, dans un classement ou de toute autre manière.

Le dispositif objet de l'invention peut être utilisé comme actionneur et être intégré dans un véhicule automobile terrestre (voiture, moto, ...), marin (bateau, sous-marin, torpille, ...), aérien (avion, drone, hélicoptère, ...), ou dans tout autre appareil, par exemple un appareil électroménager, un jouet, etc. Le dispositif objet de l'invention peut également être utilisé dans d'autres applications de positionnement indexé à angle fixe.

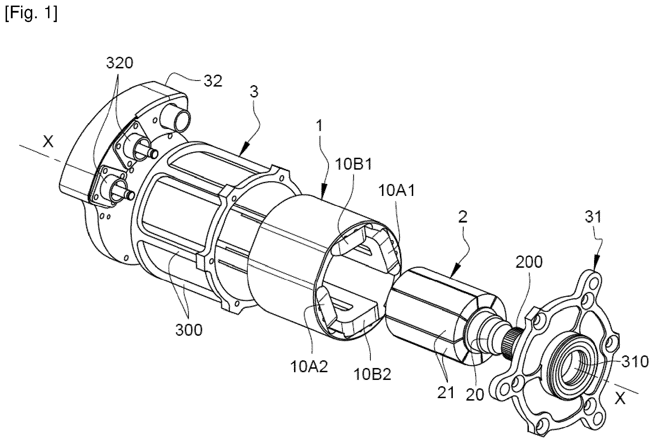

Sur la figure 1, le dispositif objet de l'invention comporte un stator 1 dans lequel est monté mobile en rotation un rotor 2. Le stator 1 est logé dans une carcasse 3 formant protection. Cette carcasse se présente par exemple sous la forme d'un tube cylindrique ouvert à ses deux extrémités, ou fermé à ses deux extrémités, ou ouvert à l'une de ses extrémités et fermé à l'autre extrémité. A titre d'exemple, la longueur de la carcasse 3 est comprise entre 5 cm et 30 cm, son diamètre interne compris entre 1,5 cm et 11,5 cm et son diamètre externe compris entre 2 cm et 12 cm.

Les extrémités de la carcasse 3 sont respectivement fermées par une flasque avant 31 et une flasque arrière 32, l'ensemble formant, après assemblage, un boîtier dans lequel est maintenu le stator 1. Les flasques 31, 32 sont disposées de part et d'autre du stator 1, lesdites flasques étant parallèles et s'étendant perpendiculairement à l'axe de rotation X-X du rotor 2. Le flasque avant 31 comporte une ouverture centrale 310, préférentiellement pourvue d'un palier ou d'un roulement à billes, et au travers de laquelle passe une extrémité de l'arbre 20 du rotor 2. Sur la figure 1, cette extrémité est pourvue de dentures 200 adaptées pour être en prise directe ou indirecte (par exemple au moyen d'un réducteur) avec un organe mécanique, préférentiellement, mais non exclusivement, avec un sélecteur de boîte de vitesses ou d'embrayage d'un véhicule automobile. Les dentures 200 et/ou l'arbre 20 peuvent bien évidemment être en prise avec un autre mécanisme.

Le flasque arrière 32 est pourvue d'un ou plusieurs connecteurs 320 pour alimenter électriquement les bobinages du stator 1. Le flasque arrière 32 peut également supporter l'unité de gestion électronique (non représentée) permettant de commander l'alimentation électrique des bobinages. Le flasque arrière 32 est préférentiellement munie d'un palier ou d'un roulement à billes supportant et guidant l'autre extrémité de l'arbre 20.

Les flasques 31 et 32 sont fixées sur la carcasse 3 par vissage, rivetage, soudage, encliquetage, etc. Elles permettent notamment de protéger les éléments du rotor 2 et du stator 1, et de bloquer axialement ledit stator et ledit rotor de sorte qu'après assemblage, ledit rotor n'a qu'un degré de liberté en rotation autour de l'axe X-X. La carcasse 3 et les flasques 31, 32 sont préférentiellement réalisées dans un matériau non ferromagnétique, par exemple en aluminium, en plastique ou en carbone, pour limiter les fuites de champs magnétiques. Pour limiter encore davantage les fuites de champs, on ménage un espace annulaire entre la paroi externe du stator 1 et la paroi interne de la carcasse 3, et dans lequel on injecte de la résine. En complément ou en substitution de la résine, le stator 1 peut être solidarisé à la carcasse 3 par vissage, rivetage, soudage, encliquetage, etc.

Sur la figure 1, la carcasse 3 comporte avantageusement des rainures ou ailettes 300 pour évacuer les calories générées par l'activation des bobinages du stator 1.

Sur les figures 1, 5 et 6, le stator 1 se présente sous la forme d'un corps ayant une forme générale tubulaire cylindrique et qui est coaxiale à l'axe de rotation X-X du rotor 2. À titre d'exemple, la longueur du stator 1 est comprise entre 5 cm et 30 cm, son diamètre externe compris entre 1 cm et 11 cm et son diamètre interne compris entre 0,5 cm et 10,5 cm. Il est réalisé dans un matériau ferromagnétique, typiquement dans un matériau à base de fer, cobalt, nickel, acier magnétique, etc. Il peut être monobloc et réalisé en une seule pièce ou réalisé en plusieurs pièces assemblées entre elles. Pour des raisons électromagnétiques (notamment pour optimiser le guidage des lignes de champ), le stator 1 est préférentiellement une pièce monobloc.

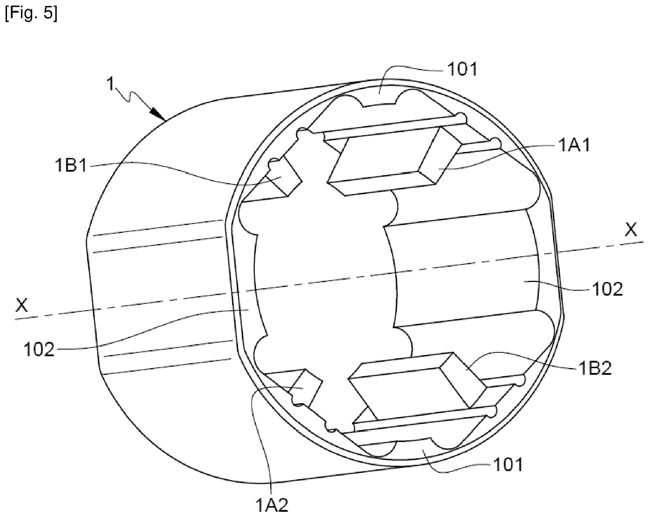

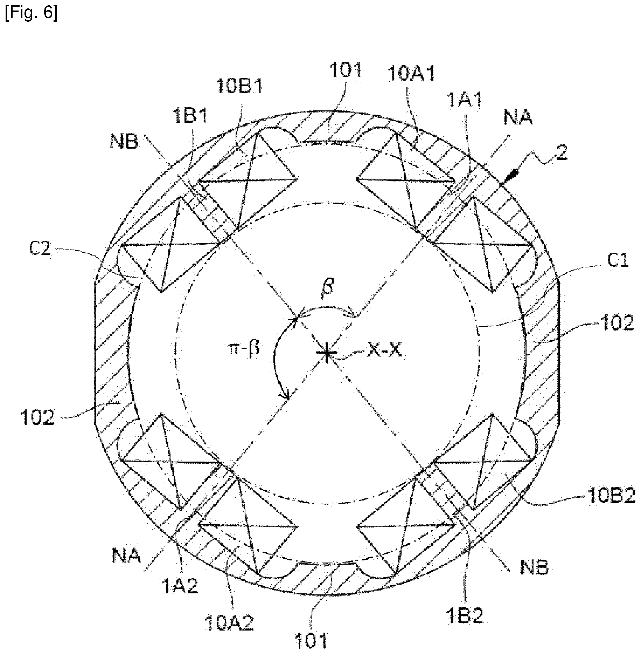

Sur les figures 5 et 6, la paroi interne du stator 1 présente des premiers noyaux ferromagnétiques 1A1, 1A2, 1B1, 1B2. Ces premiers noyaux peuvent être rapportés sur la paroi interne du stator 1. Pour simplifier la conception et réduire les coûts, il est toutefois avantageux que les premiers noyaux 1A1, 1A2, 1B1, 1B2 soient obtenus directement lors du moulage et/ou de l'usinage du stator 1 et forment avec celui-ci une pièce monobloc. Ils peuvent être pleins, ou préférentiellement creux pour alléger la structure du stator 1. Ils sont réalisés dans un matériau ferromagnétique qui est préférentiellement le même que celui utilisé pour le corps du stator 1.

Ces premiers noyaux 1A1, 1A2, 1B1, 1B2 ont la même forme et font saillie radialement vers l'axe X-X. Ils se présentent sous la forme de protubérances ou nervures longitudinales de section rectangulaire ou trapézoïdale, s'étendant dans la longueur du stator 1. À titre d'exemple, leur hauteur est comprise entre 0,5 cm et 2 cm et leur longueur entre 5 cm et 30 cm.

Les premiers noyaux sont agencés par paire, respectivement 1A1-1A2 et 1B1-1B2. Les premiers noyaux de chaque paire se font face et sont disposés symétriquement par rapport à l'axe de rotation X-X ; ils délimitent des premiers entrefers. Sur les figures annexées, le stator 1 présente deux paires de premiers noyaux, lesquelles paires sont symétriques par rapport au plan médian sagittal dudit stator. De manière plus générale, le stator 1 présente 2K paires de premiers noyaux. Dans la suite de la description, K est un nombre entier supérieur ou égal à 1. En effet, les meilleurs résultats en termes de couple et de puissance développés par le dispositif objet de l'invention sont obtenus avec K supérieur ou égal à 1, notamment K égal ou supérieur à 2 pour des dispositifs industriels de grande échelle.

Chaque premier noyau présente un axe qui correspond à son axe de symétrie et qui coupe l'axe de rotation X-X. Les premiers noyaux d'une même paire ont le même axe. Sur la figure 6, les premiers noyaux de la paire 1A1-1A2 présentent un axe commun NA-NA et ceux de la paire 1B1-1B2 un axe commun NB-NB. Selon une caractéristique de l'invention, ces deux axes ne sont pas orthogonaux de sorte que les noyaux 1A1, 1A2, 1B1, 1B2 sont agencés en « X » plutôt qu'en « + ». L'angle β entre les axes NA-NA et NB-NB est par exemple compris entre 3.π/8 et π/3. Selon un mode de réalisation, si le stator 1 présente 2K paires de premiers noyaux, l'angle β entre les axes de ces paires de premiers noyaux est inférieur à π/2K et supérieur à π/(4.K). De manière générale, si le rotor 2 présente n positions d'équilibre stable (n étant un entier pair égal ou supérieur à 4, égal ou différent de 8K), l'angle β est inférieur à π et supérieur à (2.π)/n.

Des bobinages 10A1, 10A2, 10B1, 10B2 sont installés sur les premiers noyaux 1A1, 1A2, 1B1, 1B2. Plus précisément, chaque premier noyau 1A1, 1A2, 1B1, 1B2 supporte et est couplé magnétiquement à un bobinage 10A1, 10A2, 10B1, 10B2 respectivement. Les bobinages 10A1, 10A2, 10B1, 10B2 et les premiers noyaux 1A1, 1A2, 1B1, 1B2 sur lesquels ils sont installés, ont le même axe NA-NA, NB-NB qui coupe au même endroit l'axe de rotation X-X du rotor 2.

Ces bobinages consistent 10A1, 10A2, 10B1, 10B2 en des enroulements de spires électromagnétiques. Chaque bobinage est préférentiellement constitué d'un fil de cuivre enroulé sur plusieurs tours et fixé sur un noyau. Ils ont une forme sensiblement rectangulaire. En pratique, les bobinages 10A1, 10A2, 10B1, 10B2 sont réalisés séparément, hors du stator 1. Ils sont ensuite placés autour des premiers noyaux 1A1, 1A2, 1B1, 1B2. De préférence, les bobinages 10A1, 10A2, 10B1, 10B2 sont identiques, c'est-à-dire qu'ils sont réalisés à partir de fils de même longueur et de même diamètre, enroulés de la même façon sur un même nombre de tours. La face frontale des bobinages 10A1, 10A2, 10B1, 10B2 peut venir ou non affleurer l'extrémité des premiers noyaux 1A1, 1A2, 1B1, 1B2 correspondants.

Comme les premiers noyaux 1A1, 1A2, 1B1, 1B2, les bobinages sont arrangés par paire, respectivement 10A1-10A2, et 10B1-10B2. Plus généralement, il y a K paires de bobinages. Les bobinages sont connectés à une unité de gestion commandant leur alimentation électrique (notamment le sens et l'intensité du courant). De manière connue de l'homme du métier, le champ magnétique généré par les bobinages 10A1, 10A2, 10B1, 10B2 dépend du sens et de l'intensité du courant qui les parcourt. Avantageusement, les bobinages d'une même paire sont connectés entre eux de sorte qu'ils présentent la même polarité, NORD ou SUD, lorsqu'ils sont alimentés. Selon un mode avantageux de réalisation, l'unité de gestion commande de manière indépendante l'alimentation de chaque paire de bobinages de manière à optimiser (notamment en termes de précision de positionnement) l'arrêt du rotor 2 dans une position d'équilibre stable. On peut notamment prévoir pilotage multi-phasés de l'unité de gestion, où le nombre de phases est égal au nombre de bobinages, ces phases pouvant ou non être couplées deux à deux si besoin. L'unité de gestion peut également être configurée pour que, durant le cycle d'alimentation, le sens du courant soit inversé afin de générer un contre-champ magnétique améliorant la précision et le temps d'arrêt en position du rotor 2.

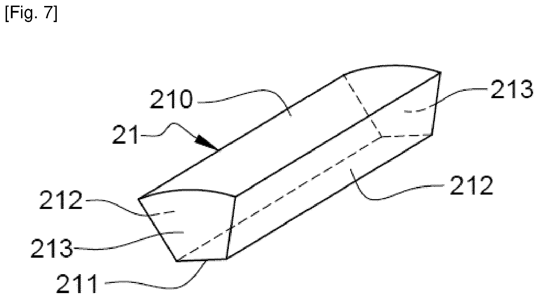

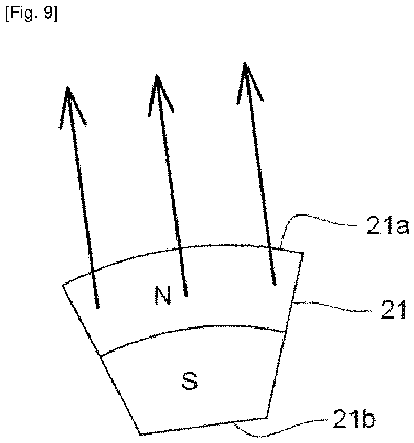

Le rotor 2 comporte des pôles rotoriques aimantés 21. En se rapportant aux figures 7 à 10, chaque pôle 21 est préférentiellement constitué d'un aimant permanent en forme de pavé longitudinal dont la section transversale a une forme générale de secteur de couronne. Plus particulièrement sur la figure 7, chaque aimant 21 comprend : - une face externe 210 qui est courbe, concave, en forme de portion de cylindre, - une face interne 211 qui est plane de forme rectangulaire, - deux faces latérales inclinées 212 planes, de forme rectangulaire, - deux faces transversales 213 planes, en forme de secteur de couronne. Selon une variante de réalisation, la face interne 211 est courbe, convexe, en forme de portion de cylindre qui est homothétique à la face externe 210. Selon une autre variante de réalisation, la face externe 210 est plane, de forme rectangulaire.

Pour optimiser les forces magnétiques qui s'appliquent sur les aimants 21, leur face externe 210 et préférentiellement leur face interne 211, ont la même longueur que les bobinages 10A1, 10A2, 10B1, 10B2.

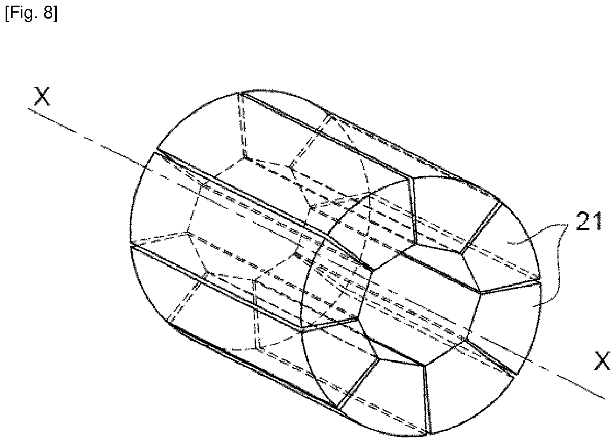

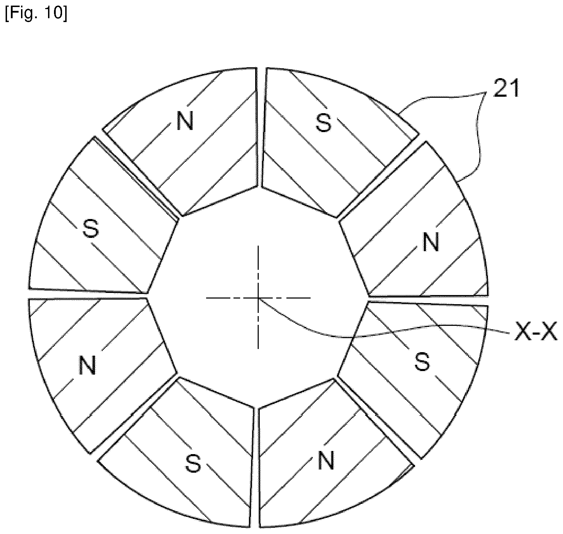

Les aimants 21 ont la même forme et sont agencés côte à côte autour de l'axe X-X de manière à former un corps creux tubulaire dont la paroi externe est cylindrique ou sensiblement cylindrique comme illustrée sur les figures 8 et 10, laquelle paroi est aimantée sur toute sa surface (abstraction faite des éventuels décalages angulaires entre les aimants 21).

Les aimants 21 sont avantageusement réalisés dans un matériau magnétique du type néodyme-fer-bore ou samarium-cobalt. De tels aimants peuvent être obtenus par tout procédé bien connu de l'homme du métier.

Sur les figures annexées, le rotor 2 comporte 8 aimants 21 adjacents, la face externe 210 de chaque aimant décrivant un secteur angulaire d'environ π/4. La demanderesse a pu constater que cette configuration permettait d'obtenir des résultats optimums en matière de rendement et de compacité. Les aimants 21 sont agencés par paire, les aimants de chaque paire se font face et sont disposés symétriquement par rapport à l'axe de rotation X-X. Plus généralement, si le stator 1 comporte 2K paires de premiers noyaux et de bobinages, le rotor 2 comporte préférentiellement 4K paires d'aimant 21, la face externe 210 chaque aimant décrivant préférentiellement un secteur angulaire de π/(4.K) ou d'environ π/(4.K). Par « environ », on entend que les aimants peuvent être assemblés avec un faible décalage angulaire entre eux (par exemple de 1° à 2°), ce décalage permettant de simplifier leur mise en position ainsi que leur maintien en position sur l'arbre 20 comme expliqué plus avant dans la description. Plus généralement encore, le nombre de pôles rotoriques aimantés 21 détermine le nombre n de positions d'équilibre stable (n étant un entier pair égal ou supérieur à 4, égal ou différent à 8K). Si le rotor 2 présente n positions d'équilibre stable, chaque aimant 21 décrit un secteur angulaire de 2π/n +/- 1° à 2°.

Les aimants 21 sont à aimantation radiale, c'est-à-dire que les deux faces 21a et 21b sont magnétisées de manière à pouvoir générer un champ magnétique qui, dans les entrefers, est perpendiculaire à l'axe X-X. En d'autres termes, les pôles rotoriques 21 sont diamétralement magnétisés de sorte que leurs lignes de champs soient parallèles à celles des bobinages 10A1, 10A2, 10B1, 10B2 situés en vis-à-vis desdits pôles. Comme illustrés sur la figure 10, les aimants 21 sont adjacents et disposés autour de l'axe X-X avec des polarités alternées N et S, où les lettres N et S correspondent respectivement aux pôles Nord et Sud des faces externes 210. En d'autres termes, les aimants 21 ont des polarités alternativement opposées.

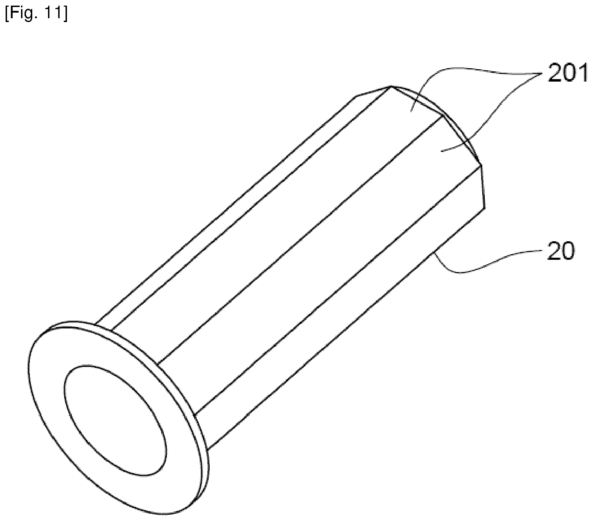

La face interne 210 de chaque aimant 21 est destinée à venir se fixer sur la paroi externe de l'arbre tournant 20, lequel arbre est illustré sur la figure 11. Pour simplifier la conception, la fixation des aimants 21 sur l'arbre 20 se fait préférentiellement par collage. On pourrait toutefois envisager une solution par assemblage mécanique. Pour simplifier la conception et le collage des aimants 21, l'arbre 20 présente une paroi externe de forme polygonale, les faces internes 211 desdits aimants étant planes et se fixant sur les facettes 201 dudit arbre (figure 11). Pour des raisons des contraintes mécaniques et de transmission du couple, on utilise également préférentiellement un arbre 20 en forme de polygone et des aimants 21 dont la face interne 211 est plane.

Pour ne pas perturber le champ magnétique généré par les aimants 21 et pour que leurs lignes de champ se bouclent au cœur de l'arbre 20, ce dernier est préférentiellement réalisé dans un matériau ferromagnétique, par exemple en acier. L'arbre 20 est préférentiellement creux pour alléger la structure du rotor 2.

Le rotor 2 présente plusieurs positions d'équilibre stable (ou positions stables magnétiquement) où il n'est soumis à aucun couple. Dans ces positions d'équilibre, le rotor 2 est uniquement soumis à des forces magnétiques qui s'annulent mutuellement. Aucun élément de butée mécanique n'est utilisé pour bloquer le rotor 2 dans ces positions.

Les positions d'équilibre stable sont définies par les premiers noyaux 1A1, 1A2, 1B1, 1B2 et les pôles rotoriques aimantés 21. Si le stator 1 comporte 2K paires de premiers noyaux, le rotor 2 présente 4K paires de pôles rotoriques 21 et 8K positions d'équilibre stable (qui correspond au pas) ou n pôles rotoriques 21. Le nombre de positions d'équilibre stable correspond alors au nombre de pôles rotoriques 21. Dans l'exemple illustré par les figures annexées, le stator comporte 2 paires de premiers noyaux (K=1), le rotor présente 4 paires d'aimants 21 et 8 positions d'équilibre stable (n=8). Le rotor 2 a par conséquent un pas de 1/8 de tour. Le positionnement des premiers noyaux 1A1, 1A2, 1B1, 1B2 dépend du positionnement des positions d'équilibre stable.

De par la configuration et l'agencement des premiers noyaux 1A1, 1A2, 1B1, 1B2 et des aimants 21, lesdits aimants sont désaxés desdits noyaux dans les positions d'équilibre stable.

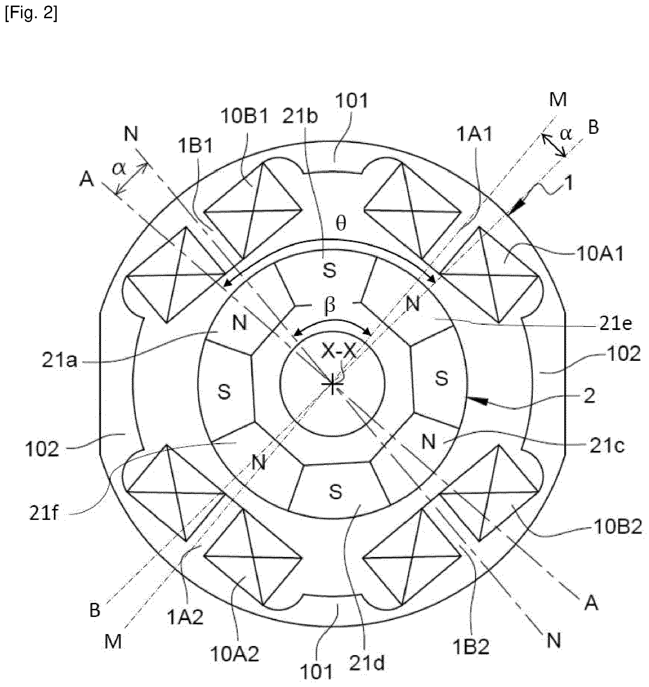

La figure 2 illustre une telle position où le rotor 2 est dans une première position d'équilibre stable. Par exemple, le bobinage 10B1 est alimenté pour avoir une polarité SUD. La polarité de l'aimant 21a qui est en vis-à-vis du bobinage 10B1 est NORD. L'aimant SUD qui est le plus proche du noyau supportant le bobinage 10B1 est l'aimant 21b qui est situé entre les deux bobinages 10A1 et 10B1. Dans cette configuration, l'axe A-A de l'aimant 21a est désaxé d'un angle « α » de l'axe N-N du noyau supportant le bobinage 10B1. L'axe A-A de l'aimant 21a correspond à son axe de symétrie et coupe l'axe de rotation X-X. Le même phénomène se retrouve au niveau du bobinage 10B2 et de l'aimant 21c. On observe également un phénomène identique au niveau du bobinage 10A1 et de l'aimant 21e et au niveau du bobinage 10A2 et de l'aimant 21e. Quelle que soit la position d'équilibre stable, le rotor 2 et le stator 1 sont donc dans le même agencement, et le couple au démarrage est le même pour chaque dite position, quel que soit le sens de rotation demandé.

La possibilité d'avoir le même couple important au démarrage, quel que soit le sens de rotation demandé et quel que soit la position d'équilibre stable, est également illustrée par une autre relation angulaire sur la figure 2. Dans une position d'équilibre stable, un premier pôle aimanté 21a d'axe A-A est situé en face d'un premier noyau 1B1 (ou bobinage 10B1) d'axe N-N. Un autre pôle aimanté 21e d'axe B-B est situé en face d'un autre premier noyau 1A1 (ou bobinage 10A1) d'axe M-M. Les deux pôles aimantés 21a et 21e ont la même polarité. Et les noyaux 1B1 et 1A1 (ou bobinages 10B1, 10A1) appartiennent chacun à une paire distincte de premiers noyaux, ces paires étant adjacentes dans le mode de réalisation de la figure 2. L'angle entre les axes N-N et M-M est noté « β » et l'angle entre les axes A-A et B-B est noté « θ ». Pour obtenir la propriété mentionnée précédemment (même couple au démarrage quel que soit le sens de rotation demandé), le rotor 1 et le stator 2 sont configurés de sorte que l'angle θ soit strictement supérieur à l'angle β. Les meilleurs résultats en termes de réactivité au démarrage sont obtenus lorsque (θ-β)/2 est supérieur à π/(2.n) et inférieur à (3.π)/(2.n), où n est le nombre de positions d'équilibre stable. Ou si le stator comporte 2K paires de premiers noyaux et le rotor 4K paires d'aimant 21, alors (θ-β)/2 est supérieur à π/(16.K) et inférieur à (3.π)/(16.K).

Pour faire tourner le rotor 2 dans le sens antihoraire, on alimente le bobinage 10B1 dans le sens d'une génération d'une polarité NORD. Une force électromagnétique répulsive s'applique sur l'aimant NORD 21a, qui se combine avec une force électromagnétique attractive appliquée sur l'aimant SUD 21b. Ces deux forces électromagnétiques ont des composantes tangentielles de même sens qui se combinent pour fournir un couple important au démarrage et permettent au rotor 2 d'être très réactif. Ce couple est d'autant plus important que les mêmes forces électromagnétiques s'appliquent par symétrie sur l'aimant NORD 21c et sur l'aimant SUD 21d situés au niveau du bobinage 10B2 également alimenté. En tout état de cause, ce couple est très supérieur au couple résiduel (ou couple de maintien) décrit plus avant dans la description.

Sur la figure 2, l'aimant SUD 21b a au moins une portion située en vis-à-vis du bobinage 10B1. La force d'attraction magnétique qu'il subit est donc optimale, contribuant de ce fait à avoir un couple important au démarrage. Le même phénomène s'applique sur l'aimant SUD 21d qui présente au moins une portion située en vis-à-vis du bobinage 10B2. De manière générale, et selon une caractéristique préférée de l'invention, dans une position d'équilibre stable, un premier aimant (ex: 21a, respectivement 21c) est situé en face d'un premier noyau ferromagnétique (ex: 1B1, respectivement 1B2). Et au moins un second aimant (ex: 21b, respectivement 21d) qui est adjacent au premier aimant (ex : 21a, respectivement 21c), a une polarité (SUD) inverse dudit premier aimant et présente au moins une portion située en vis-à-vis du premier bobinage (ex: 10B1 respectivement 10B2).

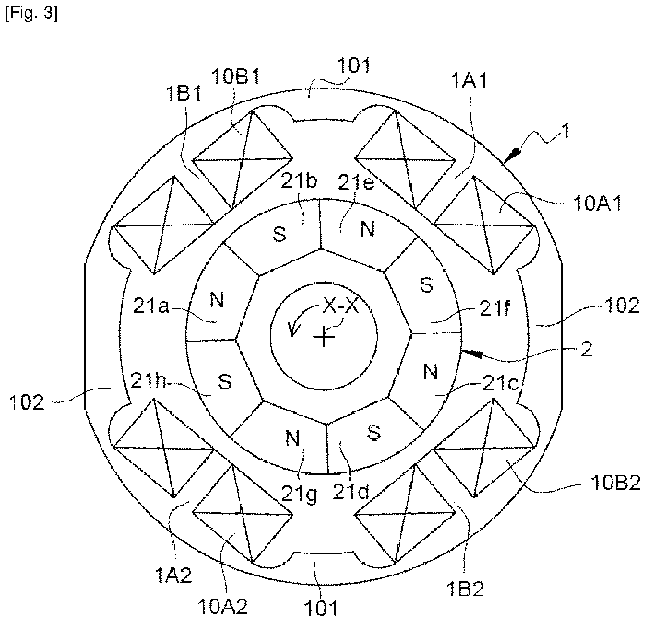

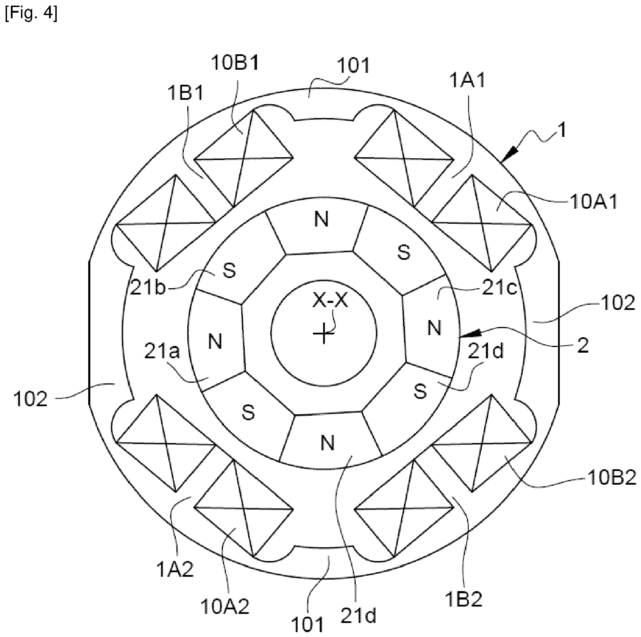

La figure 3 illustre le rotor 2 ayant engagé sa rotation dans le sens antihoraire et situé entre deux positions d'équilibre stable. Une force tangentielle répulsive continue à s'appliquer sur l'aimant NORD 21a (et 21c), mais avec une intensité moindre puisque ledit aimant s'éloigne du bobinage 10B1. Mais l'aimant SUD 21b se rapprochant du bobinage 10B1, il est soumis à une force tangentielle attractive plus importante. Il en résulte que le couple reste pratiquement constant jusqu'à ce que l'aimant SUD 21b (respectivement 21d) se retrouve en vis-à-vis du bobinage NORD 10B1 (respectivement 10B2). Cette position illustrée sur la figure 4 correspond à une deuxième position d'équilibre stable. Ce séquençage des activations des bobinages peut être réalisé autant de fois que nécessaire, de manière à faire tourner le rotor 2 en continu ou de manière pas-à-pas, sur un ou plusieurs tours.

Dans la position de mi-course illustrée sur la figure 3, les deux autres bobinages 10A1 et 10A2 peuvent être alimentés avec une polarité NORD pour qu'une force tangentielle attractive soit appliquée sur les aimants SUD 21f et 21h et qu'une force tangentielle répulsive soit appliquée sur les aimants NORD 21e et 21g. Dans ce cas, les bobinages 10B1 et 10B2 peuvent ne plus être alimentés, les bobinages 10A1 et 10A2 assurant seuls la remontée à l'apogée du couple. On peut également prévoir de n'utiliser que la seule paire de bobinages 10B1 et 10B2 et s'affranchir de l'utilisation des deux autres bobinages 10A1 et 10A2.

Partant de la position d'équilibre stable de la figure 2, et pour faire tourner le rotor 2 dans le sens horaire, on alimente le bobinage 10B1 dans le sens d'une génération d'une polarité SUD. Le rotor 2 est donc toujours prêt à démarrer avec un couple optimisé non nul dans les deux sens de rotation.

Des capteurs sont avantageusement disposés à l'intérieur du stator 1 et/ou sur le rotor 2 pour déterminer la position angulaire dudit rotor. L'unité de gestion active ou désactive l'alimentation des bobinages du stator 1 en fonction des informations fournies par ces capteurs de position. Préférentiellement, deux capteurs diamétralement opposés sont disposés sur la paroi interne du stator 1, entre les bobinages, et un capteur est positionné sur le rotor 2. On utilise préférentiellement des capteurs adaptés pour capter les flux magnétiques.

De par la configuration et l'agencement des aimants 21, la totalité de la surface externe du rotor 2 est aimantée (abstraction faite des éventuels décalages angulaires entre les aimants 21). Aussi, chaque premier noyau 1A1, 1A2, 1B1, 1B2 est constamment situé en vis-à-vis d'un aimant 21 lorsque le rotor 2 se déplace entre deux positions d'équilibre stable. Chaque premier noyau 1A1, 1A2, 1B1 est donc constamment traversé par des lignes de champs magnétiques générées par un aimant 21, lorsque le rotor 2 se déplace entre deux positions d'équilibre stable. Des forces magnétiques s'appliquent ainsi en permanence sur le rotor 2 de sorte que le couple développé est important.

Sur les figures 5 et 6, le stator 1 comporte des noyaux ferromagnétiques supplémentaires 101, 102 dépourvus de bobinage. Ces seconds noyaux 101, 102 sont situés entre les premiers noyaux 1A1, 1A2, 1B1, 1B2 de sorte qu'on a une alternance de premiers noyaux avec bobinage et de seconds noyaux sans bobinage. Ces seconds noyaux peuvent être rapportés sur la paroi interne du stator 1 ou obtenus directement lors du moulage et/ou de l'usinage dudit stator 1 et forment avec celui-ci une pièce monobloc. Ils peuvent être pleins ou creux. Ils sont réalisés dans un matériau ferromagnétique qui est préférentiellement le même que celui utilisé pour le corps du stator 1.

Ces seconds noyaux 101, 102 font saillie radialement vers l'axe X-X. Ils se présentent sous la forme de protubérances ou nervures longitudinales, s'étendant dans la longueur du stator 1, comme les premiers noyaux 1A1, 1A2, 1B1, 1B2.

Les seconds noyaux 101, 102 sont agencés par paire. Les seconds noyaux de chaque paire se font face et sont disposés symétriquement par rapport à l'axe de rotation X-X ; ils délimitent des seconds entrefers. Les seconds noyaux d'une même paire ont le même axe. Sur les figures annexées, le stator 1 présente deux paires de seconds noyaux, lesquelles paires sont symétriques par rapport au plan médian sagittal et au plan transversal dudit stator. De manière plus générale, si le stator 1 présente 2K paires de premiers noyaux avec bobinage, il présente également 2K paires de seconds noyaux sans bobinage. Sur les figures 5 et 6, les axes de chaque paire de seconds noyaux sans bobinage sont orthogonaux (l'angle entre leur axe est égal à π/2). Si le stator 1 présente 2K paires de premiers noyaux avec bobinage et 2K paires de seconds noyaux sans bobinage, l'angle entre les axes desdits seconds noyaux sans bobinage est égal à π/2K.

Les seconds noyaux 101, 102 n'ont pas tous les mêmes dimensions, notamment en largeur. Sur les figures 5 et 6, les seconds noyaux 101 de la première paire sont moins larges que ceux de la seconde paire 102. Un second noyau 101 qui est disposé entre deux premiers noyaux avec bobinage et où l'angle β entre les axes NA-NA, NB-NB respectifs desdits premiers noyaux avec bobinage est le plus faible (ex: entre les premiers noyaux 1A1 et 1B1 et/ou entre les premiers noyaux 1A2 et 1B2), alors ce second noyau 101 aura une largeur réduite. À l'inverse, un second noyau supplémentaire 102 qui est disposé entre deux premiers noyaux avec bobinage et où l'angle (π-β) entre les axes respectifs NA-NA, NB-NB desdits premiers noyaux avec bobinage est le plus important (ex: entre les premiers noyaux 1A2 et 1B1 et/ou entre les premiers noyaux 1A1 et 1B2), alors ce noyau second 102 aura une largeur plus importante. En pratique, la largeur des seconds noyaux 101, 102 correspond sensiblement à la distance séparant deux bobinages.

De cette manière, chaque aimant 21 présente au moins une portion constamment située en vis-à-vis d'un noyau ferromagnétique (avec ou sans bobinage) lorsque le rotor 2 se déplace entre deux positions d'équilibre stable et lorsque ledit rotor est dans une position d'équilibre stable. Sur la figure 2 (première position stable), les aimants NORD sont situés en vis-à-vis des premiers noyaux avec bobinages 1A1, 1A2, 1B1, 1B2 ; et les aimants SUD sont situés en vis-à-vis des seconds noyaux sans bobinagel101 et 102. Sur la figure 3 (position intermédiaire), au moins une portion des aimants SUD et au moins une portion des aimants NORD sont situées en vis-à-vis des seconds noyaux 101 et 102. Et sur la figure 4 (seconde position stable), les aimants SUD sont situés en vis-à-vis des premiers noyaux avec bobinages 1A1, 1A2, 1B1, 1B2 ; et les aimants NORD sont situés en vis-à-vis des seconds noyaux 101 et 102.

Les lignes de champs magnétiques générées par les aimants 21 se bouclent donc en permanence dans un des noyaux du stator 1. Cela est particulièrement avantageux pour augmenter le couple résiduel dans les positions d'équilibre stable, lorsque les bobinages ne sont pas alimentés. Tout en étant extrêmement réactif au moment du démarrage, le rotor 2 reste verrouillé ou figé dans une position d'équilibre stable, ce qui est particulièrement avantageux lorsque le dispositif est utilisé pour actionner un dispositif tel qu'un sélecteur de boîte de vitesses ou d'embrayage de véhicule automobile. Si ce couple résiduel n'est pas souhaitable, les seconds noyaux 101 et 102 seront supprimés. Par ailleurs en agissant sur les dimensions et/ou la géométrie des seconds noyaux 101 et 102, on peut modifier et/ou adapter l'intensité de ce couple résiduel afin d'ajuste le compromis entre la réactivité du rotor au démarrage et son verrouillage en position d'équilibre stable. Notamment, en diminuant les dimensions des seconds noyaux 101 et 102 et/ou en augmentant le diamètre de la seconde circonférence (i.e. la profondeur des seconds entrefers), on diminue l'intensité du couple résiduel. Et inversement. En d'autres termes, l'ajustement des dimensions et/ou de la géométrie des seconds noyaux 101 et 102, permet d'adapter l'intensité du couple résiduel et le couple de démarrage dans une position d'équilibre stable et/ou la forme de la courbe du couple entre deux positions d'équilibre stable.

En outre, selon un mode de réalisation illustré notamment sur la figure 6, les premiers noyaux 1A1, 1A2, 1B1, 1B2 et les seconds noyaux 101, 102 ne sont pas agencés selon la même circonférence par rapport à l'axe de rotation X-X du rotor. Ils n'ont pas la même hauteur. Les premiers noyaux sont agencés selon une première circonférence C1 et les seconds noyaux selon une seconde circonférence C2. La première circonférence C1 coïncide avec l'extrémité libre des premiers noyaux et la seconde circonférence C2 avec l'extrémité libre des seconds noyaux. Le diamètre de la seconde circonférence C2 est plus grand que le diamètre de la première circonférence C1. En d'autres termes, on augmente les seconds entrefers par rapport aux premiers entrefers qui se retrouvent plus proches des pôles rotoriques. En agissant sur la seconde circonférence C2, on peut ainsi modifier et/ou adapter l'intensité du couple résiduel (et le couple de démarrage) dans les positions d'équilibre stable et/ou la forme de la courbe du couple entre deux positions d'équilibre stable. Il est également envisageable d'ajuster la hauteur de certains seconds noyaux (i.e. les seconds noyaux n'ont pas tous la même hauteur et/ou ne sont pas agencés selon la même circonférence) de manière à adapter l'intensité du couple résiduel.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de la portée de l'invention comme définie dans les revendications. En particulier les pôles rotoriques 21 peuvent se présenter sous la forme d'électro-aimants.

Enfin, une ou plusieurs caractéristiques et/ou étapes exposées seulement dans un mode de réalisation peuvent être généralisées aux autres modes de réalisation. De même, une ou plusieurs caractéristiques et/ou étapes exposées seulement dans un mode de réalisation peuvent être combinées avec une ou plusieurs autres caractéristiques et/ou étapes exposées seulement dans un autre mode de réalisation.

## Revendications

1. Dispositif d'entraînement rotatif électromagnétique, comportant un stator (1) et un rotor (2) et dans lequel :
- le stator (1) comporte des premiers noyaux ferromagnétiques (1A1, 1A2, 1B1, 1B2) sur lesquels sont installées des bobinages (10A1, 10A2, 10B1, 10B2) adaptés pour créer un champ magnétique, lesquels premiers noyaux sont de même forme et une extrémité libre des premiers noyaux ferromagnétiques (1A1, 1A2, 1B1, 1B2) est agencée selon une première circonférence (C1) par rapport à l'axe de rotation (X-X) du rotor (2),
- le rotor (2) comporte des pôles rotoriques aimantés (21),
- une unité de gestion commande l'alimentation électrique des bobinages (10A1, 10A2, 10B1, 10B2) du stator (1) en fonction de la position angulaire du rotor (2), de façon à créer un champ magnétique tournant adapté pour entraîner en rotation ledit rotor,
- le rotor (2) présente plusieurs positions d'équilibre stable,
- les premiers noyaux ferromagnétiques (1A1, 1A2, 1B1, 1B2) et les pôles aimantés (21) sont configurés et agencés de sorte que :
o dans les positions d'équilibre stable, les pôles aimantés (21) sont désaxés des premiers noyaux ferromagnétiques (1A1, 1A2, 1B1, 1B2),
o chaque premier noyau ferromagnétique (1A1, 1A2, 1B1, 1B2) est constamment situé en vis-à-vis d'un des pôles aimantés (21) lorsque le rotor (2) se déplace entre deux positions d'équilibre stable,
- le stator (1) comporte des seconds noyaux ferromagnétiques (101, 102) dépourvus de bobinage, lesquels seconds noyaux sont situés entre les premiers noyaux ferromagnétiques (1A1, 1A2, 1B1, 1B2) de manière à ce que ledit stator présente une alternance de noyaux avec bobinage et de noyaux sans bobinage, **se caractérisant par le fait que** les seconds noyaux ferromagnétiques (101, 102) sont configurés pour exercer un couple résiduel sur le rotor (2), lesquels seconds noyaux n'ont pas tous les mêmes dimensions et/ou la même géométrie et une extrémité libre des seconds noyaux ferromagnétiques (101, 102) est agencée selon une seconde circonférence (C2) par rapport à l'axe de rotation (X-X) du rotor (2), le diamètre de ladite seconde circonférence étant différente du diamètre de la première circonférence (C1).

2. Dispositif selon la revendication 1, dans lequel le diamètre de la seconde circonférence (C2) est plus grand que le diamètre de la première circonférence (C1).

3. Dispositif selon l'une des revendications précédentes, dans lequel, dans une position d'équilibre stable :
- un premier pôle aimanté (21a) est situé en face d'un premier noyau ferromagnétique (1B1), lequel premier pôle aimanté présente un axe (A-A) et lequel premier noyau ferromagnétique présente un axe (N-N),
- un second pôle aimanté (21e) est situé en face d'un autre premier noyau ferromagnétique (1A1), ledit second pôle aimanté ayant la même polarité que le premier pôle aimanté (21a), lesdits premiers noyaux (1B1, 1A1) appartenant chacun à une paire distincte de premiers noyaux, lequel second pôle aimanté présente un axe (B-B) et lequel autre premier noyau ferromagnétique présente un axe (M-M),
- les axes (N-N, M-M) desdits premiers noyaux (1A1, 1B1) formant un angle β et les axes (A-A, B-B) desdits pôles aimantés (21a, 21e) formant un angle θ,
- le rotor (1) et le stator (2) sont configurés de sorte que :
∘ θ > β et
∘ π/(2.n) < (θ-β)/2 < (3.π)/(2.n), où n est le nombre de positions d'équilibre stable du rotor (2).

4. Dispositif selon l'une des revendications précédentes, dans lequel :
- les seconds noyaux ferromagnétiques (101, 102) sont agencés par paire, les noyaux de chaque paire se faisant face et étant disposés symétriquement par rapport à l'axe de rotation (X-X) du rotor (2),
- un second noyau ferromagnétique (101) qui est disposé entre deux premiers noyaux (1A1, 1B1) et où un angle β entre les axes respectifs (NA-NA, NB-NB) desdits premiers noyaux est le plus faible, alors ledit second noyau (101) a une première largeur,
- à l'inverse, un second noyau ferromagnétique (102) qui est disposé entre deux premiers noyaux (1A2, 1B1) et où l'angle (π-β) entre les axes respectifs (NA-NA, NB-NB) desdits premiers noyaux est le plus important, alors ce second noyau a une seconde largeur qui est plus importante que la première largeur.

5. Dispositif selon l'une des revendications précédentes, dans lequel :
- le stator (1) comprend 2K paires de premiers noyaux ferromagnétiques (1A1, 1A2, 1B1, 1B2), et 2K paires de seconds noyaux ferromagnétiques (101, 102), K étant un nombre entier égal ou supérieur à 1,
- les bobinages (10A1, 10A2, 10B1, 10B2) de chaque paire de premiers noyaux ferromagnétiques (1A1, 1A2, 1B1, 1B2) sont disposés symétriquement par rapport à l'axe de rotation (X-X) du rotor (2) ;
- le rotor (2) présente n pôles rotoriques (21) adjacents, lesquels pôles ont des polarités alternativement opposées, n étant un nombre entier pair supérieur ou égal à 4, le nombre n de pôles rotoriques correspondant au nombre de positions d'équilibre stable dudit rotor.

6. Dispositif selon la revendication 5, dans lequel :
- les premiers noyaux ferromagnétiques (1A1, 1A2, 1B1, 1B2) d'une même paire ont le même axe (NA-NA, NB-NB),
- l'angle β entre les axes de ces paires de premiers noyaux ferromagnétiques (1A1, 1A2, 1B1, 1B2) est inférieur à π et supérieur à (2.π)/n.

7. Dispositif selon l'une des revendications précédentes, dans lequel les pôles aimantés (21) sont diamétralement magnétisés de sorte que leurs lignes de champs soient parallèles à celles des bobinages (10A1, 10A2, 10B1, 10B2) situés en vis-à-vis desdits pôles.

8. Dispositif selon la revendication 7 prise en combinaison avec la revendication 6, dans lequel une face externe (210) de chaque aimant (1 située en vis-à-vis du stator, décrit un secteur angulaire de (2.π)/n +/- 1° à 2°.

9. Dispositif selon l'une des revendications 7 ou 8, dans lequel les aimants (21) comportent une face interne (211) plane de forme rectangulaire, lesquelles faces sont fixées sur des facettes (201) d'un arbre (20) en forme de polygone du rotor (2).

10. Dispositif selon l'une des revendications précédentes, dans lequel, dans une position d'équilibre stable du rotor (2) ou entre deux positions d'équilibre stable dudit rotor, les pôles aimantés (21) présentent au moins une portion constamment située en vis-à-vis d'un premier noyau ferromagnétique (1A1, 1A2, 1B1, 1B2) avec bobinage ou d'un second noyau ferromagnétique (1A1, 1A2, 1B1, 1B2) sans bobinage.

11. Procédé de fabrication d'un dispositif conforme à l'une des revendications 1 à 10, comprenant une étape consistant à régler l'intensité du couple résiduel exercé sur le rotor (2) dans une position d'équilibre stable, lequel réglage est réalisé en agissant sur les dimensions et/ou la géométrie des seconds noyaux (101, 102) et/ou en agissant sur la seconde circonférence (C2).

12. Sélecteur de boîte de vitesses ou d'embrayage d'un véhicule automobile, **caractérisé en ce que** ledit sélecteur est relié au rotor (2) du dispositif conforme à l'une des revendications 1 à 10.

13. Véhicule automobile comportant un sélecteur de boîte de vitesses ou d'embrayage, **caractérisé en ce que** ledit sélecteur est conforme à la revendication 12.

## Patentansprüche

1. Elektromagnetische Drehantriebsvorrichtung, die einen Stator (1) und einen Rotor (2) aufweist und wobei:
- der Stator (1) erste ferromagnetische Kerne (1A1, 1A2, 1B1, 1B2) aufweist, auf denen Wicklungen (10A1, 10A2, 10B1, 10B2) installiert sind, die geeignet sind, ein Magnetfeld zu erzeugen, wobei die ersten Kerne die gleiche Form haben und ein freies Ende der ersten ferromagnetischen Kerne entlang eines ersten Umfangs (C1) in Bezug auf die Drehachse (X-X) des Rotors (2) eingerichtet ist,
- der Rotor (2) magnetisierte Rotorpole (21) aufweist,
- eine Verwaltungseinheit die Stromversorgung der Wicklungen (10A1, 10A2, 10B1, 10B2) des Stators (1) in Abhängigkeit von der Winkelposition des Rotors (2) derart steuert, dass ein rotierendes Magnetfeld erzeugt wird, das geeignet ist, den Rotor rotatorisch anzutreiben,
- der Rotor (2) mehrere stabile Gleichgewichtspositionen aufweist,
- die ersten ferromagnetischen Kerne (1A1, 1A2, 1B1, 1B2) und die magnetisierten Pole (21) so ausgelegt und eingerichtet sind, dass:
∘ in den stabilen Gleichgewichtspositionen die magnetisierten Pole (21) von den ersten ferromagnetischen Kernen (1A1, 1A2, 1B1, 1B2) achsversetzt sind,
∘ sich jeder erste ferromagnetische Kern (1A1, 1A2, 1B1, 1B2) ständig gegenüber einem der magnetisierten Pole (21) befindet, wenn sich der Rotor (2) zwischen zwei stabilen Gleichgewichtspositionen bewegt,
- der Stator (1) zweite ferromagnetische Kerne (101, 102) ohne Wicklung aufweist, wobei sich die zweiten Kerne zwischen den ersten ferromagnetischen Kernen (1A1, 1A2, 1B1, 1B2) derart befinden, dass der Stator eine Abfolge von Kernen mit Wicklung und von Kernen ohne Wicklung aufweist,
**dadurch gekennzeichnet, dass** die zweiten ferromagnetischen Kerne (101, 102) ausgelegt sind, um ein Restdrehmoment auf den Rotor (2) auszuüben, wobei die zweiten Kerne nicht alle die gleichen Abmessungen und/oder die gleiche Geometrie haben und ein freies Ende der zweiten ferromagnetischen Kerne entlang eines zweiten Umfangs (C2) in Bezug auf die Drehachse (X-X) des Rotors (2) eingerichtet ist, wobei der Durchmesser des zweiten Umfangs von dem Durchmesser des ersten Umfangs (C1) unterschiedlich ist.

2. Vorrichtung nach Anspruch 1, wobei der Durchmesser des zweiten Umfangs (C2) größer als der Durchmesser des ersten Umfangs (C1) ist.

3. Vorrichtung nach einem der vorhergehenden Ansprüche, wobei in einer stabilen Gleichgewichtsposition:
- ein erster magnetisierter Pol (21a) einem ersten ferromagnetischen Kern (1B1) gegenüberliegt, wobei der erste magnetisierte Pol eine Achse (A-A) aufweist und der erste ferromagnetische Kern eine Achse (N-N) aufweist,
- ein zweiter magnetisierter Pol (21e) einem anderen ersten ferromagnetischen Kern (1A1) gegenüberliegt, wobei der zweite magnetisierte Pol die gleiche Polarität wie der erste magnetisierte Pol (21a) hat, wobei die ersten Kerne (1B1, 1A1) jeweils zu einem unterschiedlichen Paar erster Kerne gehören, wobei der zweite magnetisierte Pol eine Achse (B-B) aufweist und der andere erste ferromagnetische Kern eine Achse (M-M) aufweist,
- wobei die Achsen (N-N, M-M) der ersten Kerne (1A1, 1B1) einen Winkel β bilden und die Achsen (A-A, B-B) der magnetisierten Pole (21a, 21e) einen Winkel θ bilden,
- der Rotor (1) und der Stator (2) so ausgelegt sind, dass:
∘ θ 〉 β und
∘ π/(2.n) 〈 (θ-β)/2 〈 (3.π)/(2.n), wobei n die Anzahl der stabilen Gleichgewichtspositionen des Rotors (2) ist.

4. Vorrichtung nach einem der vorhergehenden Ansprüche, wobei:
- die zweiten ferromagnetischen Kerne (101, 102) paarweise eingerichtet sind, wobei die Kerne jedes Paars einander zugewandt und symmetrisch zur Rotationsachse (X-X) des Rotors (2) angeordnet sind,
- ein zweiter ferromagnetischer Kern (101), der zwischen zwei ersten Kernen (1A1, 1B1) angeordnet ist und wobei ein Winkel β zwischen den jeweiligen Achsen (NA-NA, NB-NB) der ersten Kerne am kleinsten ist, während der zweite Kern (101) eine erste Breite hat,
- umgekehrt ein zweiter ferromagnetischer Kern (102), der zwischen zwei ersten Kernen (1A2, 1B1) angeordnet ist und wobei der Winkel (π-β) zwischen den jeweiligen Achsen (NA-NA, NB-NB) der ersten Kerne am größten ist, während dieser zweite Kern eine zweite Breite hat, die größer als die erste Breite ist.

5. Vorrichtung nach einem der vorhergehenden Ansprüche, wobei:
- der Stator (1) 2K Paare erster ferromagnetischer Kerne (1A1, 1A2, 1B1, 1B2) und 2K Paare zweiter ferromagnetischer Kerne (101, 102) umfasst, wobei K eine Ganzzahl gleich oder größer als 1 ist,
- die Wicklungen (10A1, 10A2, 10B1, 10B2) jedes Paares erster ferromagnetischer Kerne (1A1, 1A2, 1B1, 1B2) symmetrisch zur Rotationsachse (X-X) des Rotors (2) angeordnet sind;
- der Rotor (2) n benachbarte Rotorpole (21) aufweist, wobei die Pole abwechselnd entgegengesetzte Polaritäten haben, wobei n eine gerade Ganzzahl größer oder gleich 4 ist, wobei die Anzahl n der Rotorpole der Anzahl der stabilen Gleichgewichtspositionen des Rotors entspricht.

6. Vorrichtung nach Anspruch 5, wobei:
- die ersten ferromagnetischen Kerne (1A1, 1A2, 1B1, 1B2) desselben Paares die gleiche Achse (NA-NA, NB-NB) haben,
- der Winkel β zwischen den Achsen dieser Paare erster ferromagnetischer Kerne (1A1, 1A2, 1B1, 1B2) kleiner als π und größer als (2.π)/n ist.

7. Vorrichtung nach einem der vorhergehenden Ansprüche, wobei die magnetisierten Pole (21) diametral magnetisiert sind, so dass ihre Feldlinien parallel zu denen der Wicklungen (10A1, 10A2, 10B1, 10B2) verlaufen, die sich gegenüber den Polen befinden.

8. Vorrichtung nach Anspruch 7 in Kombination mit Anspruch 6, wobei eine Außenfläche (210) jedes Magneten (1), die sich gegenüber dem Stator befindet, einen Winkelsektor von (2.π)/n +/- 1° bis 2° beschreibt.

9. Vorrichtung nach einem der Ansprüche 7 oder 8, wobei die Magnete (21) eine rechteckige ebene Innenfläche (211) aufweisen, wobei diese Flächen an Facetten (201) einer polygonförmigen Welle (20) des Rotors (2) befestigt sind.

10. Vorrichtung nach einem der vorhergehenden Ansprüche, wobei in einer stabilen Gleichgewichtsposition des Rotors (2) oder zwischen zwei stabilen Gleichgewichtspositionen des Rotors die magnetisierten Pole (21) mindestens einen Abschnitt aufweisen, der sich konstant gegenüber einem ersten ferromagnetischen Kern (1A1, 1A2, 1B1, 1B2) mit Wicklung oder einem zweiten ferromagnetischen Kern (1A1, 1A2, 1B1, 1B2) ohne Wicklung befindet.

11. Verfahren zur Herstellung einer Vorrichtung nach einem der Ansprüche 1 bis 10, umfassend einen Schritt, der darin besteht, die Stärke des auf den Rotor (2) in einer stabilen Gleichgewichtsposition ausgeübten Restdrehmoments einzustellen, wobei die Einstellung durch Einwirken auf die Abmessungen und/oder die Geometrie der zweiten Kerne (101, 102) und/oder durch Einwirken auf den zweiten Umfang (C2) erfolgt.

12. Wahlschalter für ein Getriebe oder eine Kupplung eines Kraftfahrzeugs, **dadurch gekennzeichnet, dass** der Wahlschalter mit dem Rotor (2) der Vorrichtung nach einem der Ansprüche 1 bis 10 verbunden ist.

13. Kraftfahrzeug, das einen Wahlschalter für ein Getriebe oder eine Kupplung aufweist, **dadurch gekennzeichnet, dass** der Wahlschalter nach Anspruch 12 ist.

## Claims

1. An electromagnetic rotary drive, comprising a stator (1) and a rotor (2) and wherein:
- The stator (1) comprises first ferromagnetic cores (1A1, 1A2, 1B1 and 1B2) on which windings (10A1, 10A2, 10B1 and 10B2) are installed and adapted to create a magnetic field, with the first cores having the same shape and positioned along a first circumference (C1) in relation to the axis of rotation (X-X) of the rotor (2)
- The rotor (2) has magnetised rotor poles (21)
- A control unit controls the power supply to the windings (10A1, 10A2, 10B1 and 10B2) of the stator (1) according to the angular position of the rotor (2), to create a rotating magnetic field adapted to rotate said rotor
- The rotor (2) has several stable equilibrium positions
- The first ferromagnetic cores (1A1, 1A2, 1B1 and 1B2) and the magnetised poles (21) are configured and positioned so that:
∘ In the stable equilibrium positions, the magnetised poles (21) are offset from the first ferromagnetic cores (1A1, 1A2, 1B1 and 1B2)
∘ Each first ferromagnetic core (1A1, 1A2, 1B1 and 1B2) is always located opposite one of the magnetised poles (21) when the rotor (2) moves between two stable equilibrium positions
- The stator (1) has second ferromagnetic cores (101 and 102) without windings, with the second cores located between the first ferromagnetic cores (1A1, 1A2, 1B1 and 1B2) so that said stator has alternating cores with windings and cores without windings
**characterised in that** the second ferromagnetic cores (101 and 102) are configured to exert a residual torque on the rotor (2), with the second cores not all having the same dimensions and/or geometry and positioned along a second circumference (C2) in relation to the axis of rotation (X-X) of the rotor (2), with the diameter of said second circumference being different from the diameter of the first circumference (C1).

2. A device according to claim 1, wherein the diameter of the second circumference (C2) is larger than the diameter of the first circumference (C1).

3. A device according to any of the preceding claims, wherein, in a stable equilibrium position:
- A first magnetised pole (21a) is located opposite a first ferromagnetic core (1B1), with the first magnetised pole having an axis (A-A) and the first ferromagnetic core having an axis (N-N)
- A second magnetised pole (21e) is positioned opposite another first ferromagnetic core (1A1), with said second magnetised pole having the same polarity as the first magnetised pole (21a), and said first cores (1B1 and 1A1) each belonging to a separate pair of first cores, with the second magnetised pole having an axis (B-B) and the other first ferromagnetic core having an axis (M-M)
- The axes (N-N and M-M) of said first cores (1A1 and 1B1) forming an angle β and the axes (A-A and B-B) of said magnetised poles (21a and 21e) forming an angle θ
- The rotor (1) and stator (2) are configured so that:
∘ θ 〉 β and
∘ π/(2.n) 〈 (θ-β)/2 〈 (3.π)/(2.n), where n is the number of stable equilibrium positions of rotor (2).

4. A device according to any of the preceding claims, wherein:
- The second ferromagnetic cores (101 and 102) are positioned in pairs, with each pair's cores facing each other and arranged symmetrically in relation to the axis of rotation (X-X) of the rotor (2)
- A second ferromagnetic core (101) which is positioned between two first cores (1A1 and 1B1) and where the angle β between the respective axes (NA-NA and NB-NB) of said second cores is the smallest, then said second core (101) has a first width
- Conversely, a second ferromagnetic core (102) which is positioned between two first cores (1A2 and 1B1) and where the angle (π-β) between the respective axes (NA-NA and NB-NB) of said second cores is greatest, then this second core has a second width which is larger than the first width.

5. A device according to any of the preceding claims, wherein:
- The stator (1) comprises 2K pairs of first ferromagnetic cores (1A1, 1A2, 1B1 and 1B2), and 2K pairs of second ferromagnetic cores (101 and 102), K being a whole number equal to or larger than one
- The windings (10A1, 10A2, 10B1 and 10B2) of each pair of first ferromagnetic cores (1A1, 1A2, 1B1 and 1B2) are positioned symmetrically in relation to the axis of rotation (X-X) of the rotor (2)
- The rotor (2) has n adjacent rotor poles (21), with the poles having alternately opposite polarities, n being an even whole number larger than or equal to four, the number n of rotor poles corresponding to the number of stable equilibrium positions of said rotor.

6. A device according to claim 5, wherein:
- The first ferromagnetic cores (1A1, 1A2, 1B1 and 1B2) of a pair have the same axis (NA-NA and NB-NB)
- The angle β between the axes of these pairs of first ferromagnetic cores (1A1, 1A2, 1B1 and 1B2) is below π and over (2.π)/n.

7. A device according to any of the preceding claims, wherein the magnetised poles (21) are diametrically magnetised so that their field lines are parallel to those of the windings (10A1, 10A2, 10B1 and 10B2) located opposite said poles.

8. A device according to claim 7 taken in combination with claim 6, wherein the outer face (210) of each magnet (1) traces an angular sector of (2.π)/n +/- 1° to 2°.

9. A device according to one of claims 7 or 8, wherein the magnets (21) have a flat rectangular inner face (211), with these faces attached to the sides (201) of a polygon-shaped shaft (20) of the rotor (2).

10. A device according to any of the preceding claims, wherein, in a stable equilibrium position of the rotor (2) or between two stable equilibrium positions of said rotor, the magnetised poles (21) have at least one portion always positioned opposite a first ferromagnetic core (1A1, 1A2, 1B1 or 1B2) with a winding or a second ferromagnetic core (1A1, 1A2, 1B1 or 1B2) without a winding.

11. A method of producing a device according to any of claims 1 to 10, comprising a step of adjusting the level of residual torque exerted on the rotor (2) in a stable equilibrium position, with the adjustment carried out by acting on the dimensions and/or geometry of the second cores (101 and 102) and/or by acting on the second circumference (C2).

12. Gearbox or clutch selector for a motor vehicle, **characterised in that** said selector is connected to the rotor (2) of the device according to one of claims 1 to 10.

13. A motor vehicle comprising a gearbox or clutch selector, **characterised in that** said selector is in accordance with claim 12.
